# FASCICULE DE BREVET EUROPEEN

(11) **EP 0 524 097 B1**
(45) Date de publication et mention de la délivrance du brevet: **25.09.1996**
(21) Numéro de dépôt: 92402055.5
(22) Date de dépôt: 16.07.1992
(51) Int. Cl.: H04M 9/02, H04M 3/58, H04M 1/72

(54) **Dispositif pour la commande d'un récepteur d'appel d'un poste téléphonique dans une installation domestique**
Einrichtung zur Steuerung eines Rufempfängers von einem Fernsprechgerät in einer Hausanlage
Device for the control of a call receiver of a telephone set in a domestic installation

(30) Priorité: 16.07.1991 FR 9108963
(43) Date de publication de la demande: 20.01.1993
(73) Titulaire: FRANCE TELECOM, 75015 Paris (FR)
(72) Inventeur: Lege, Jean-Claude, F-51200 Saint Martin d'Ablois (FR)
(74) Mandataire: Armengaud Ainé, Alain

(56) Documents cités:
- DE-A- 3 538 486
- FR-A- 2 517 910
- US-A- 3 435 151

## Description

La présente invention est relative à un dispositif destiné à permettre le déclenchement par l'usager lui-même d'un récepteur d'appel, c'est-à-dire de la sonnerie d'un poste téléphonique à partir d'un quelconque autre poste monté en parallèle avec le premier à l'intérieur d'une installation simple, en particulier à usage domestique et notamment ne comportant pas d'autocommutateur assurant la gestion des divers postes de cette installation, c'est-à-dire leurs interconnexions et la distribution vers l'un quelconque de ceux-ci d'un appel extérieur.

Il est classique désormais, pour les particuliers notamment, de disposer d'une installation téléphonique comportant plusieurs postes séparés, montés en parallèle sur leur ligne et répartis dans des pièces distinctes de leur logement ou du local auquel aboutit cette ligne. De cette façon, l'utilisateur peut répondre à un appel extérieur arrivant sur sa ligne en décrochant le combiné du poste situé à proximité puis, s'il le souhaite, se déplacer jusqu'à un autre poste disposé dans une pièce séparée de celle où est prévu le premier poste, afin de décrocher le second et poursuivre sa conversation avec son interlocuteur. Une telle éventualité peut en particulier se présenter lorsque l'usager a besoin de consulter ou aller chercher un document ou objet quelconque qui ne se trouve pas à proximité immédiate du premier poste avec lequel il a pris la ligne, en évitant d'avoir à aller prendre le document souhaité en laissant la ligne bouclée puis à revenir vers le premier poste afin de continuer l'entretien téléphonique.

Des solutions de ce genre sont décrites dans les brevets FR-A-2.517.910 et US-A-3.435.151.

Toutefois, cette situation présente l'inconvénient que, si une tierce personne ne raccroche pas le combiné du premier poste, qui reste donc décroché, le courant de ligne se répartit alors entre les deux postes dès que l'utilisateur a décroché le second, en affaiblissant sensiblement l'audition de la conversation.

Pour pallier cet inconvénient, le demandeur a déjà proposé une solution telle que décrite et revendiquée dans sa demande français 88.05863 du 2 Mai 1988 pour un "Dispositif de mise en garde d'une ligne téléphonique", qui prévoit d'insérer dans le circuit de la ligne raccordée à l'installation, un thyristor qui, déclenché par l'utilisateur lui-même, maintient la ligne fermée, même lorsque le premier poste est raccroché, et est mis hors circuit dès que le second est à son tour décroché, en évitant ainsi que le courant de ligne ne se divise de manière inopportune.

La présente invention concerne un dispositif qui apporte un autre perfectionnement à une installation domestique de ce genre, sans autocommutateur, en permettant à l'usager qui décroche le premier poste, de commander le récepteur d'appel, c'est-à-dire la sonnerie d'un autre poste distant du précédent, pour avertir une autre personne, située à proximité de ce second poste, qu'un appel lui est destiné, en l'invitant alors à décrocher ce second poste pour converser avec l'appelant, le premier poste pouvant être alors raccroché ou mis hors service, le cas échéant en utilisant les dispositions faisant l'objet de la demande de brevet précitée.

A cet effet, le dispositif considéré, mis en oeuvre dans une installation domestique, comportant au moins deux postes montés en parallèle sur une ligne téléphonique aboutissant à cette installation, destiné notamment à commander le récepteur d'appel d'un second poste à partir d'un premier poste préalablement décroché et sur lequel sont raccordés les deux fils (L1, L2) de la ligne téléphonique, comportant, monté à l'intérieur du premier poste, un premier contact de commande (X1), se caractérise en ce que le premier contact boucle l'un des fils (L2) de la ligne via un fil intermédiaire (S) connectant les deux postes à travers une résistance (R1) pour mettre la ligne en attente par un second contact (X3) et placer le récepteur d'appel du second poste en parallèle sur les deux premiers fils de la ligne, et en ce qu'il comporte également un troisième contact de commande (X2) en série avec un transformateur (T) de courant de ligne du premier poste, enclenché à l'ouverture consécutivement à la fermeture du premier contact, disposé entre les deux fils de la ligne, en série avec le premier poste et agencé de telle sorte que, à la suite de son ouverture, le premier poste soit déconnecté de cette ligne qui fournit alors au récepteur d'appel du second poste l'intensité nécessaire à son fonctionnement.

Avantageusement et selon une caractéristique particulière du dispositif considéré, l'ouverture du troisième contact (X2) commande simultanément la fermeture du second contact (X3), monté entre le fil intermédiaire (S) et l'autre des fils (L1) de la ligne, en série avec un ensemble de visualisation fournissant un témoin de la commande du récepteur d'appel du second poste puis du décrochage de ce dernier.

De préférence, l'ensemble de visualisation comporte, entre ses bornes, un pont formé de quatre diodes deux à deux en série et propres à polariser une diode électroluminescente montée dans la diagonale du pont, en série avec une résistance ajustant la valeur du courant nécessaire à la commande du récepteur d'appel du second poste.

Selon encore une autre caractéristique et dans un mode de réalisation particulier de l'invention, la diode électroluminescente est montée en série avec un jeu de résistances en parallèle, de valeurs différentes, dont chacune est mise en oeuvre à la demande par la fermeture d'un contact, de manière à limiter le courant dans la diode d'une façon variant selon la valeur de la résistance mise en service.

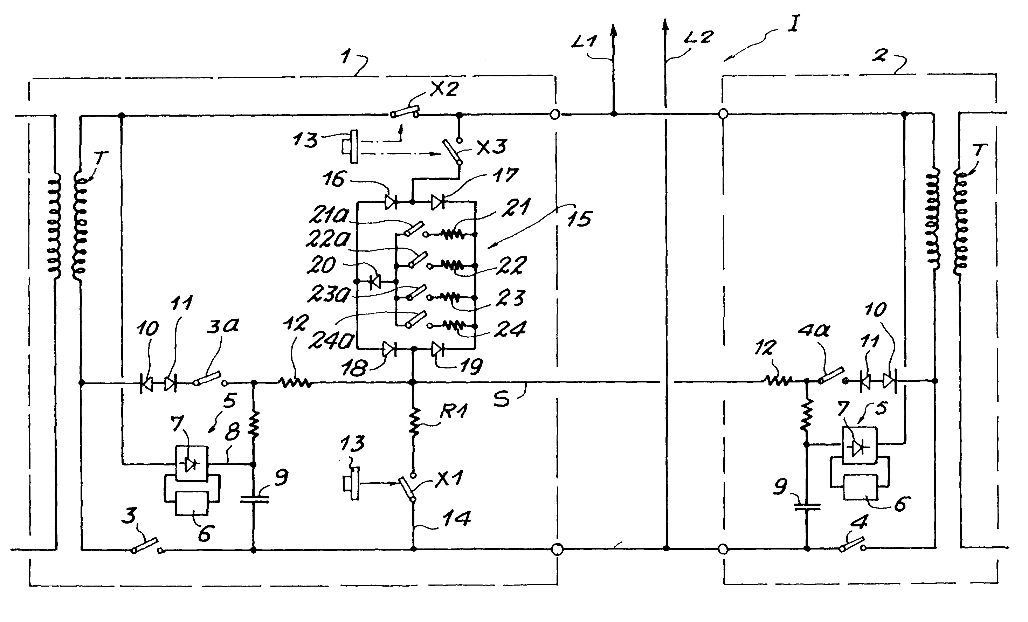

D'autres caractéristiques pour la commande d'un récepteur d'appel d'un poste téléphonique dans une installation domestique, apparaîtront encore à travers la description qui suit d'un exemple de réalisation, donné à titre indicatif et non limitatif, en référence à la Figure unique du dessin annexé qui illustre le schéma de montage de l'installation, comportant dans l'exemple considéré, deux postes raccordés en parallèle sur la même ligne et situés à distance l'un de l'autre.

Sur cette Figure, les références respectivement L1 et L2, désignent les deux fils d'arrivée d'une ligne téléphonique classique dans une installation d'usager, désignée dans son ensemble sous la référence I, celle-ci comportant, dans l'exemple représenté deux postes récepteurs, respectivement 1 et 2, schématisés sur le dessin par un contour en traits pointillés, chaque poste comprenant notamment un transformateur T tel que, consécutivement à la fermeture d'un interrupteur 3 ou 4, pour l'un ou l'autre poste, soit délivré au microphone de ce poste, le courant de la ligne permettant l'établissement de la conversation entre l'appelant et l'appelé. Les interrupteurs 3 et 4 simulent ainsi, à la fermeture, l'opération qui consiste pour l'usager à décrocher son récepteur et à prendre la ligne en réponse à un appel transmis sur cette dernière.

Dans ce but, chaque poste 1 ou 2 comporte un récepteur d'appel 5, comprenant un dispositif 6 d'excitation d'une sonnerie avertissant l'usager de l'appel survenant sur la ligne, ce dispositif étant monté sur un pont 7 en parallèle entre les fils L1 et L2 de la ligne. La liaison 8 sur laquelle est connectée le pont comporte un condensateur 9, ne permettant le passage dans le récepteur d'appel que d'un courant alternatif excitant la sonnerie, en interdisant en revanche le passage du courant continu de ligne.

L'interrupteur 3 (ou 4) fermant la ligne au décroché du poste considéré est couplé avec un second interrupteur 3a (ou 4a) monté en série avec deux diodes tête-bêche, respectivement 10 et 11, de telle sorte que, à la fermeture de cet interrupteur, le courant de sonnerie soit redressé et transmis sur un fil intermédiaire S, monté en parallèle sur les fils L1 et L2 de la ligne, l'interrupteur étant en série avec une résistance 12 de limitation du courant. A noter que ces dispositions ne font pas en elles-mêmes partie du dispositif selon l'invention, car elles sont entièrement classiques et existent dans tous les postes disponibles à l'heure actuelle sur le marché.

Selon l'invention, l'un au moins des deux postes 1 et 2 de l'installation I, le cas échéant les deux postes, est muni d'un bouton poussoir 13 à double action, permettant à l'usager qui, se trouvant dans un local où est monté le poste 1 par exemple et qui a décroché celui-ci lors de l'excitation du récepteur d'appel 5 correspondant, puis qui souhaite transférer l'appel sur le poste 2, situé à distance dans un autre local en avertissant une personne se situant dans ce dernier, de commander le récepteur d'appel de l'autre poste et ainsi de faire résonner la sonnerie de celui-ci, bien que le courant disponible à cet instant sur la ligne qui alimente alors le premier poste en position décrochée, soit par lui-même insuffisant pour produire la mise en oeuvre de cette sonnerie.

A cet effet, le bouton 13 ferme dans un premier temps un contact X1 prévu sur une liaison 14 montée entre les fils S et L2, mettant en circuit dans cette liaison une résistance R1 à travers laquelle les deux fils sont ainsi bouclés. Ensuite, le bouton poussoir 13 ferme un autre contact X3, en série avec le premier à travers un dispositif de visualisation 15 dont le détail sera explicité plus loin. En outre, le bouton 13 ouvre, simultanément à la fermeture du contact X3, un contact additionnel X2, qui déconnecte le poste 1, sans couper la communication puisque, comme dit ci-dessus, la ligne est bouclée à travers X1, R1 et X3.

La mise hors circuit du poste 1 permet dès lors au courant dans la ligne rendu disponible, d'exciter le récepteur d'appel 5 du second poste 2 et en conséquence d'actionner la sonnerie de celui-ci, jusqu'à ce que l'utilisateur décroche le poste en prenant alors la communication, le poste 1 étant simultanément mis hors circuit.

Le dispositif de visualisation 15 permet de contrôler le bon fonctionnement du système et en particulier, pour l'usager situé au poste 1, de vérifier que la sonnerie du récepteur d'appel du second poste 2 a bien fonctionné et que ce poste a effectivement ensuite été décroché, en permettant la reprise de la conversation sur la ligne à partir de ce second poste.

Dans ce but, le dispositif 15 comporte quatre diodes 16, 17, 18 et 19, montées en pont et dans la diagonale duquel est prévue une diode électroluminescente 20, en série avec l'une quelconque de quatre résistances 21, 22, 23, 24, par l'intermédiaire d'un interrupteur 21a, 22a, 23a, 24a en série avec la résistance correspondante, le choix d'une de ces dernières par fermeture de l'interrupteur correspondant étant effectué une fois pour toutes par l'usager ou le monteur de l'installation, selon la valeur du courant effectivement disponible sur la ligne en fonction de la localisation de l'installation sur le réseau, valeur nécessaire à l'excitation du récepteur d'appel 5.

Lorsque celui-ci est excité, le courant qui traverse la diode électroluminescente est suffisant pour éclairer celle-ci, en avertissant l'usager que le récepteur d'appel du second poste est excité. Lorsque celui-ci est décroché, se produit un affaiblissement de l'intensité lumineuse de la diode 20, voire une extinction de celle-ci, permettant de contrôler que ce second poste est bien dans cet état et par conséquent que la conversation se poursuit avec l'appelant.

## Revendications

1. Dispositif pour la commande d'un récepteur d'appel d'un poste téléphonique dans une installation domestique, comportant au moins deux postes (1, 2) montés en parallèle sur une ligne téléphonique (L1, L2) aboutissant à l'installation, destiné notamment à commander le récepteur d'appel d'un second poste à partir d'un premier poste préalablement décroché et sur lequel sont raccordés les deux fils (L1, L2) de la ligne téléphonique, comportant, monté à l'intérieur du premier poste (1), un premier contact de commande (X1), caractérisé en ce que le premier contact boucle l'un des fils (L2) de la ligne via un fil intermédiaire (S) connectant les deux postes (1, 2) à travers une résistance (R1) pour mettre la ligne en attente par un second contact (X3) et placer le récepteur d'appel (6) du second poste (2) en parallèle sur les deux premiers fils de la ligne, et en ce qu'il comporte également un troisième contact de commande (X2) en série avec un transformateur (T) de courant de ligne du premier poste (1), enclenché à l'ouverture consécutivement à la fermeture du premier contact (X1), disposé entre les deux fils (L1, L2) de la ligne, en série avec le premier poste et agencé de telle sorte que, à la suite de son ouverture, le premier poste soit déconnecté de cette ligne qui fournit alors au récepteur d'appel du second poste l'intensité nécessaire à son fonctionnement.

2. Dispositif selon la revendication 1, caractérisé en ce que l'ouverture du troisième contact (X2) commande simultanément la fermeture du second contact (X3), monté entre le fil intermédiaire (S) et l'autre des fils (L1) de la ligne, en série avec un ensemble de visualisation (15) fournissant un témoin de la commande du récepteur d'appel (6) du second poste (2) puis du décrochage de ce dernier.

3. Dispositif selon la revendication 2, caractérisé en ce que l'ensemble de visualisation (15) comporte, entre ses bornes, un pont formé de quatre diodes (16, 17, 18, 19) deux à deux en série et propres à polariser une diode électroluminescente (20) montée dans la diagonale du pont, en série avec une résistance ajustant la valeur du courant nécessaire à la commande du récepteur d'appel (6).

4. Dispositif selon la revendication 3, caractérisé en ce que la diode électroluminescente (20) est montée en série avec un jeu de résistances en parallèle (21, 22, 23, 24), de valeurs différentes, dont chacune est mise en oeuvre à la demande par la fermeture d'un contact (21a, 22a, 23a, 24a), de manière à limiter le courant dans la diode d'une façon variant selon la valeur de la résistance mise en service.

## Patentansprüche

1. Vorrichtung zur Steuerung eines Rufempfängers eines Telefonapparats in einer Hausanlage, die mindestens zwei Apparate (1, 2) aufweist, die parallel an einer Telefonleitung (L1, L2) angeschlossen sind, die zu der Anlage führt, wobei die Vorrichtung insbesondere dafür bestimmt ist, den Rufempfänger eines zweiten Apparats ausgehend von einem ersten, zuvor abgehobenen Apparat aus zu steuern, mit dem die beiden Adern (L1, L2) der Telephonleitung verbunden sind, wobei die Vorrichtung weiterhin einen im Inneren des ersten Apparats montierten ersten Steuerungskontakt (X1) aufweist,
dadurch gekennzeichnet, daß der erste Kontakt eine der Adern (L2) über eine Zwischenader (S) einschleift, die die beiden Apparate (1, 2) über einen Widerstand (R1) verbindet, um die Leitung über einen zweiten Kontakt (X3) auf "wartend" zu stellen und um den Rufempfängers (6) des zweiten Apparats (2) parallel auf die beiden ersten Adern der Leitung zu legen,
und dadurch, daß sie noch einen dritten Steuerungskontakt (X2) in Reihe mit einem Transformator (T) für den Strom der Leitung des ersten Apparats (1) aufweist, wobei der dritte Steuerungskontakt (X2) nach dem Schließen des ersten Kontakts (X1) geöffnet wird und wobei der dritte Steuerungskontakt (X2) weiterhin zwischen den beiden Adern (L1, L2) der Leitung angeordnet ist, und zwar in Reihe mit dem ersten Apparat und dergestalt, daß auf sein Öffnen hin der erste Apparat von dieser Leitung getrennt ist, die dann dem Rufempfänger des zweiten Apparats die für seinen Betrieb notwendige Stromintensität zuführt.

2. Vorrichtung nach Anspruch 1, dadurch gekennzeichnet, daß das Öffnen des dritten Kontakts (X2) gleichzeitig das Schließen des zweiten Kontakts (X3) steuert, der in Reihe mit einer Anzeigegruppe (15) zwischen die Zwischenader (S) und die andere Ader (L1) der Leitung geschaltet ist, wobei die Anzeigergruppe (15) ein Anzeigesignal der Ansteuerung des Rufempfängers (6) des zweiten Apparats (2) und dann des Abhebens dieses letzteren liefert.

3. Vorrichtung gemäß Anspruch 2, dadurch gekennzeichnet, daß die Anzeigegruppe (15) zwischen ihren Anschlüssen eine Brücke aufweist, die von vier lexeils paarweise in Reihe geschalteten Dioden (16, 17 18, 19) gebildet wird, die dazu dienen, einer in der Diagonalen der Brücke angeschlossenen Leuchtdiode (20) eine Vorspannung zu geben, wobei die Leuchtdiode in Reihe mit einem Widerstand geschaltet ist, der den zur Steuerung des Rufempfärgers (6) notwendigen Stromwert einstellt.

4. Vorrichtung gemäß Anspruch 3, dadurch gekennzeichnet, daß die Leuchtdiode (20) in Reihe mit einem Satz paralleler Widerstände (21, 22, 23, 24) mit unterschiedlichen Werten geschaltet ist, von denen jeder nach Bedarf durch das Schließen eines Kontakts (21a, 22a, 23a, 24a) eingeschaltet wird, um den Strom in der Diode auf einen Wert zu begrenzen, der entsprechend dem Wert des eingeschalteten Widerstandes verändert ist.

## Claims

1. Device for the control of a call receiver of a telephone set in a domestic installation comprising at least two stations (1, 2), mounted in parallel on a telephone line (L1, L2) terminating at the installation, designed in particular to control the call receiver of a second station from a first station previously taken off-the-hook, and to which are connected the two wires (L1, L2) of the telephone line, comprising on the inside of the first station (1) a first control contact (X1), characterised in that the first contact loops one of the wires (L2) of the line via an intermediate wire (S) connecting the two stations (1, 2) across a resistor (R1) to put the line on stand-by through a second contact (X3) and to place the call receiver (6) of the parallel second station (2) on the two first wires of the line, and in that it also comprises a third control contact (X2) in series with a current transformer (T) of the line of the first station (1), engaged open after the closing of the first contact (X1), disposed between the two wires (L1, L2) of the line, in series with the first station and arranged so that after opening the first station is disconnected from this line which supplies to the call receiver of the second station the necessary current for its operation.

2. Device according to claim 1. characterised in that the opening of the third contact (X2) simultaneously controls the closing of the second contact (X3) mounted between the intermediate wire (S) and the other wire (L1) of the line, in series with a display device (15) providing evidence of the control of the call receiver (6) of the second station (2) then of the unhooking thereof.

3. Device according to claim 2, characterised in that the display device (15) comprises between its terminals a bridge formed from four diodes (16, 17, 18, 19) arranged two by two in series and capable of polarising an electroluminescent diode (20) mounted in the diagonal of the bridge in series with a resistor adjusting the level of the current necessary for controlling the call receiver (6).

4. Device according to claim 3, characterised in that the electroluminescent diode (20) is mounted in series with a set of parallel resistors (21, 22, 23, 24) of different values, each one of which is used as required on the closing of a contact (21a, 22a, 23a, 24a), so as to restrict the current in the diode in a manner that varies according to the level of resistance used.
